(19) Europäisches Patentamt
European Patent Office
Office européen des brevets

(11) **EP 3 541 858 B1**

(12) **EUROPEAN PATENT SPECIFICATION**

(45) Date of publication and mention
of the grant of the patent:
**09.11.2022 Bulletin 2022/45**

(21) Application number: **17743413.1**

(22) Date of filing: **19.06.2017**

(51) International Patent Classification (IPC):
**C08F 210/16** $^{(2006.01)}$     **C08F 4/24** $^{(2006.01)}$
**C08F 4/69** $^{(2006.01)}$

(52) Cooperative Patent Classification (CPC):
(C-Sets available)
**C08F 210/16**                                   (Cont.)

(86) International application number:
**PCT/US2017/038127**

(87) International publication number:
**WO 2018/093421 (24.05.2018 Gazette 2018/21)**

(54) **POLYMERIZATION PROCESSES UTILIZING CHROMIUM-CONTAINING CATALYSTS**

POLYMERISIERUNGSVERFAHREN MIT VERWENDUNG VON CHROMHALTIGEN
KATALYSATOREN

PROCÉDÉS DE POLYMÉRISATION UTILISANT DES CATALYSEURS CONTENANT DU CHROME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.11.2016 US 201662423943 P**

(43) Date of publication of application:
**25.09.2019 Bulletin 2019/39**

(73) Proprietor: **ExxonMobil Chemical Patents Inc.**
**Baytown, TX 77520 (US)**

(72) Inventors:
 • **LIN, Zerong**
  **Porter, TX 77365 (US)**
 • **SMITH, Edward F.**
  **Houston, TX 77019 (US)**
 • **TRAPP, Keith W.**
  **Kingwood, TX 77345 (US)**

(74) Representative: **ExxonMobil Chemical Europe Inc.**
**IP Law Europe**
**Hermeslaan 2**
**1831 Machelen (BE)**

(56) References cited:
**WO-A2-02/02652**        **US-A- 3 158 594**
**US-A1- 2012 058 288**

Processed by Luminess, 75001 PARIS (FR)                                   **(Cont. next page)**

(52) Cooperative Patent Classification (CPC): (Cont.)

C-Sets
**C08F 210/16, C08F 4/24;**
**C08F 210/16, C08F 4/69;**
**C08F 210/16, C08F 210/14, C08F 2500/04,**
**C08F 2500/07, C08F 2500/12**

C-Sets
**C08F 210/16, C08F 4/24;**

**Description**

[Deleted]

FIELD OF THE INVENTION

The invention generally relates to processes for the production of polyolefin polymers utilizing chromium-containing catalysts with aluminum alkyls.

BACKGROUND OF THE INVENTION

Polyethylene polymers have been used generally and widely as resin materials for various molded articles and are required of different properties depending on the molding method and purpose. For example, polymers having relatively low molecular weights and narrow molecular weight distributions are suitable for articles molded by an injection molding method. On the other hand, polymers having relatively high molecular weights and broad molecular weight distributions are suitable for articles molded by blow molding or inflation molding. In many applications, medium-to-high molecular weight polyethylene polymers are desirable. Such polyethylene polymers have sufficient strength for applications which call for such strength (e.g., pipe applications), and simultaneously possess good processability characteristics.

Polyethylene polymers having broad molecular weight distributions can be obtained by use of a chromium-containing catalyst obtained by calcining a chromium compound carried on an inorganic oxide carrier in a non-reducing atmosphere to activate it such that at least a portion of the carried chromium atoms is converted to hexavalent chromium atoms (Cr+6) commonly referred to as a Phillips catalyst. The respective material is disposed onto silica, fluidized and heated in the presence of oxygen to about 400°C-860°C, converting chromium from the +3 oxidation state to the +6 oxidation state. A second chromium catalyst used for high density polyethylene applications consists of silylchromate (bis-triphenylsilyl chromate) absorbed on dehydrated silica and subsequently reduced with an aluminum alkyl such as, for example, diethylaluminum ethoxide (DEALE). *See, for example,* U.S. Patent No. 6,989,344, U.S. Patent Application Publication No. 2003/0232935, WO 2011/161412, and WO 2016/036745.

The resulting polyethylene polymers produced by each of these catalysts are different in some important properties. Chromium oxide-on-silica catalysts are generally considered to have good productivity (g PE/g catalyst), also measured by activity (g PE/g catalyst-hr), but produce polyethylene polymers with molecular weight distributions lower than that desired. Silylchromate-based catalysts produce polyethylene polymers with desirable molecular weight characteristics (i.e., broader molecular weight distribution with a high molecular weight shoulder on molecular weight distribution curve, indicative of two distinct molecular weight populations).

However, activated chromium catalysts such as those described above used for High Density Polyethylene (HDPE) production nevertheless may suffer from issues related to low catalyst activity, fouling, too low, or too high MW capability, and/or poor HDPE properties. Melt index and high load melt index of HDPE manufactured with activated chromium catalysts are generally controlled by reactor temperature. For some HDPE grades, reactor temperatures need to be close to the fouling temperature in order to reach the target melt index or high load melt index. In addition, in order to prepare multiple grades of HDPE products, the use of multiple catalysts and multiple catalyst activation temperatures is required. Such a requirement complicates the manufacturing process. As such, there remains a need to provide a good balance of polymer properties while using an activated catalyst having high productivity and/or a simplification in the manufacturing process to produce multiple grades of HDPE.

Higher molecular weight HDPE can be produced with activated chromium catalysts. Lower calcination temperatures, for example, in the range of 400-700°C, result in lower activity. Also, higher surface area silicas promote higher molecular weights. Further modification of the chromium catalysts by adding aluminum or titanium compounds prior to calcification results in the desired higher molecular weights. Therefore, there is a long felt need to achieve the desired balance of polymerization reactor conditions to produce the desired molecular weight distribution as indicated by MI or HLMI, good melt strength, and swell that processes properly to produce the final molded product stiffness and strength, typically measured by ESCR.

SUMMARY OF THE INVENTION

The invention provides for a process for adjusting one or more of the high load melt index ($I_{21.6}$), weight average molecular weight ($M_w$), and molecular weight distribution ($M_w/M_n$) of one or more of polyolefin polymers during a polymerization reaction or adjusting the catalyst activity of the polymerization reaction as described in claim 1. In many embodiments, this method allows for adjustment of a single activated chromium oxide catalyst to make a range of MI and HLMI HDPE polymers with comparable properties to the chromium catalysts that are modified with aluminum and or titanium compounds prior to calcification.

Other embodiments of the invention are described, claimed herein, and are apparent by the following disclosure.

## BRIEF DESCRIPTION OF THE DRAWING

The FIG. shows the range of High Load Melt Index ($I_{21.6}$) of polyethylene that can be prepared from activated Cr catalyst pre-contacted with increasing levels of DEALE as indicated by the Al/Cr ratio.

## DETAILED DESCRIPTION

Before the present compounds, components, compositions, and/or methods are disclosed and described, it is to be understood that unless otherwise indicated this invention is not limited to specific compounds, components, compositions, reactants, reaction conditions, ligands, structures, or the like, as such may vary, unless otherwise specified. It is also to be understood that the terminology used herein is for the purpose of describing particular embodiments only and is not intended to be limiting.

Embodiments of the disclosure provide for a process for adjusting one or more of the high load melt index ($I_{21.6}$), weight average molecular weight ($M_w$), and molecular weight distribution ($M_w/M_n$) of one or more of polyolefin polymers during a polymerization reaction or adjusting the catalyst activity of the polymerization reaction, the process comprising: a) pre-contacting at least one activated chromium-containing catalyst with at least one aluminum alkyl in a solvent slurry to form a catalyst mixture outside of a polymerization reactor; b) passing the catalyst slurry mixture to the polymerization reactor; c) contacting the catalyst mixture with one or more monomers under polymerizable conditions to form the one or more of polyolefin polymers; and d) recovering the one or more of polyolefin polymers, wherein one or more of the high load melt index ($I_{21.6}$), the weight average molecular weight ($M_w$), and the molecular weight distribution ($M_w/M_n$) of the one or more of polyolefin polymers or the catalyst activity of the polymerization reaction may change when the ratio of aluminum alkyl to chromium-containing catalyst changes.

### Catalysts and Catalyst Supports

Chromium, chromium-containing, or chromium-based catalysts are well-known and find utility for the polymerization of polyolefin polymers. Examples of two widely used catalysts include chromium oxide ($CrO_3$) and silylchromate catalysts, optionally, with at least one support. Chromium-containing catalysts have been the subject of much development in the area of continuous fluidized-bed gas-phase and slurry polymerization for the production of polyethylene polymers. Such catalysts and polymerization processes have been described, for example, in U.S. Patent Application Publication No. 2011/0010938 and U.S. Patent Nos. 2,825,721, 7,915,357, 8,129,484, 7,202,313, 6,833,417, 6,841,630, 6,989,344, 7,504,463, 7,563,851, 8,420,754, and 8,101,691.

Typically, the catalyst system includes a supported chromium catalyst and a cocatalyst or activator. In general, one such catalyst includes a chromium compound supported on an inorganic oxide matrix. Typical supports include silicon, aluminum, zirconium and thorium oxides, as well as combinations thereof. Various grades of silica and alumina support materials are widely available from numerous commercial sources.

In a particular embodiment, the support is silica. Suitable silica generally has a good balance of a high surface area and large particle size. These silicas are typically in the form of spherical particles obtainable by a spray-drying process, or in the form of granular particles by a milling method, and have a surface area of about at least 300 $m^2$/g and an average particle size at least 25 microns. Methods for measuring surface area, pore volume, and average particle size are disclosed in WO 2011/161412. For production of higher molecular weight HDPE, higher surface areas of about 500-600 $m^2$/g are typically used along with modification with Al or Ti.

In several classes of embodiments, the silica support is rigid and has a large particles size at an average of about 90 -110 microns and a high surface area extending up to at least 800 $m^2$/g. *See, for example,* WO 2011/161412. Without being bound to theory, the high surface area promotes the formation of a high molecular weight component that provides improved physical polymer properties, especially stress crack resistance for high load melt index products such as HDPE drums and intermediate bulk containers (IBC's). It also allows for the use of low levels of Al or Ti modification of the Cr/silica activated catalyst.

Commercially available silica supports include but are not limited to the support for the PQ PD-11050 catalyst (880 $m^2$/g surface area and 1.87 mL/g pore volume); the support for the PD-13070 catalyst (872 $m^2$/g surface area and 2.03 mL/g pore volume) available from the PQ Corporation, Malvern, Pennsylvania. Previously, PQ silicas were limited to surface areas at around or below 650 $m^2$/g such as their ES 70, CS2133 and CS2050, MS3065 silicas. Alternately, Sylopol 952, 955, 2408 and others are available from Grace Speciality Catalysts, W.R. Grace & Co., Columbia, Maryland.

In another embodiment, the support is a silica-titania support. Silica-titania supports are well known in the art and are described, for example, in U.S. Patent No. 3,887,494. Silica-titania supports can also be produced as described in U.S. Patent Nos. 3,887,494, 5,096,868 and 6,174,981 by "cogelling" or coprecipitating silica and a titanium compound.

Chromium may be present in the catalyst in an amount from a lower limit of 0.1, 0.5, 0.8, 1.0%, or 1.5% by weight to an upper limit of 10%, 8%, 5%, or 3% by weight, with ranges from any lower limit to any upper limit being contemplated.

Suitable commercially available chromium-containing catalysts include HA- 30, HA30W and HA30LF, products of W. R. Grace & Co., containing about 1% Cr by weight. Supported titanium-chromium catalysts are also commercially available and include titanium-surface modified chromium catalysts from PQ Corporation such as C-23307, C-25305, C-25345, C-23305, and C-25307. Commercially available titanium surface modified chromium catalysts typically contain about 1-5% Ti and 1% Cr by weight. Other commercially available catalysts include chromium-containing PD-11050 catalyst and aluminum surface modified PD-13070 chromium catalyst, commercially available from PQ Corporation.

Typically, the catalyst is activated prior to use by heating the dry catalyst system in a non-reducing atmosphere, conveniently in air or in an oxygen-enriched atmosphere. The activation temperature may be from 400°C, 450°C, 500°C or 550°C to 900°C, 800°C, or 700°C, with ranges from any lower limit to any upper limit being contemplated. In a particular embodiment, the activation temperature is at approximately 600°C. Typical heating times may be for 30 minutes to 50 hours, with 2 to 20 hours being generally sufficient. Activation is conveniently carried out in a stream of fluidizing air wherein the stream of fluidizing air is continued as the material is cooled.

Cocatalyst

The chromium-containing catalyst may be used with at least one cocatalyst or activator. In general, the cocatalyst may be a metal alkyl of a Group 13 metal. The cocatalyst can be a compound of formula $MR_3$, where M is a group 13 metal (in accordance with the new numbering scheme of the IUPAC), and each R is independently a linear or branched $C_1$ or $C_2$ or $C_4$ to $C_{12}$ or $C_{10}$ or $C_8$ alkyl group. Mixtures of two or more such metal alkyls are also contemplated, and are included within the term "cocatalyst" as used herein.

In a class of embodiments, M is aluminum, and the cocatalyst is at least one aluminum alkyl. Aluminum alkyls include triethyl aluminum (TEAl), tri-isobutylaluminum (TIBAl), tri-n-hexyl aluminum (TNHA), tri-n-octylaluminum (TNOA), and mixtures thereof.

In another class of embodiments, the at least one aluminum alkyl may be an alkyl aluminum alkoxide compound, such as, for example, diethyl aluminum ethoxide (DEAlE).

In any of the embodiments described above, the aluminum alkyl may be precontacted with the at least one chromium-containing catalyst at an Al/Cr molar ratio of 0.01 to 10.00, at an Al/Cr molar ratio of 0.05 to 10.00, at an Al/Cr molar ratio of 0.05 to 8.00, at an Al/Cr molar ratio of 0.10 to 8.00, at an Al/Cr molar ratio of 0.10 to 5.00, at an Al/Cr molar ratio of 0.50 to 5.00, or at an Al/Cr molar ratio of 1.00 to 3.00.

Polymerization Process

Embodiments of the present disclosure include polymerization processes where monomer (such as ethylene and/or propylene), and optionally comonomer, are contacted under polymerizable conditions with at least one chromium-containing catalyst and at least one cocatalyst, as described above. As used herein, "polymerizable conditions" refer those conditions including a skilled artisan's selection of temperature, pressure, reactant concentrations, optional solvent/diluents, reactant mixing/addition parameters, and other conditions within at least one polymerization reactor that are conducive to the reaction of one or more olefin monomers when contacted with an activated olefin polymerization catalyst to produce the desired polyolefin polymer.

Monomers useful herein include substituted or unsubstituted C2 to C40 alpha olefins, preferably C2 to C20 alpha olefins, preferably C2 to $C_{12}$ alpha olefins, preferably ethylene, propylene, butene, pentene, hexene, heptene, octene, nonene, decene, undecene, dodecene and isomers thereof. In a preferred embodiment, olefins include a monomer that is ethylene or propylene and one or more optional comonomers comprising one or more of a C4 to C40 olefin, preferably, C4 to C20 olefin, or preferably, C6 to $C_{12}$ olefin. The C4 to C40 olefin monomers may be linear, branched, or cyclic. The C4 to C40 cyclic olefin may be strained or unstrained, monocyclic or polycyclic, and may include one or more heteroatoms and/or one or more functional groups. In another preferred embodiment, olefins include a monomer that is ethylene and an optional comonomer comprising one or more of C3 to C40 olefin, preferably C4 to C20 olefin, or preferably C6 to C12 olefin. The C3 to C40 olefin monomers may be linear, branched, or cyclic. The C3 to C40 cyclic olefins may be strained or unstrained, monocyclic or polycyclic, and may include heteroatoms and/or one or more functional groups.

Exemplary C2 to C40 olefin monomers and optional comonomers include ethylene, propylene, butene, pentene, hexene, heptene, octene, nonene, decene, undecene, dodecene, norbornene, norbornadiene, dicyclopentadiene, cyclopentene, cycloheptene, cyclooctene, cyclooctadiene, cyclododecene, 7-oxanorbornene, 7-oxanorbornadiene, substituted derivatives thereof, and isomers thereof, preferably hexene, heptene, octene, nonene, decene, dodecene, cyclooctene, 1,5-cyclooctadiene, 1-hydroxy-4-cyclooctene, 1-acetoxy-4-cyclooctene, 5-methylcyclopentene, cyclopentene, dicyclopentadiene, norbornene, norbornadiene, and substituted derivatives thereof, preferably norbornene, norbornadiene, and dicyclopentadiene.

Diolefin monomers include any hydrocarbon structure, preferably C4 to C30, having at least two unsaturated bonds, wherein at least two of the unsaturated bonds are readily incorporated into a polymer by either a stereospecific or a non-stereospecific catalyst(s). It is further preferred that the diolefin monomers be selected from alpha, omega-diene monomers (i.e., di-vinyl monomers). In at least one embodiment, the diolefin monomers are linear di-vinyl monomers, such as those containing from 4 to 30 carbon atoms. Non-limiting examples of dienes include butadiene, pentadiene, hexadiene, heptadiene, octadiene, nonadiene, decadiene, undecadiene, dodecadiene, tridecadiene, tetradecadiene, pentadecadiene, hexadecadiene, heptadecadiene, octadecadiene, nonadecadiene, icosadiene, heneicosadiene, docosadiene, tricosadiene, tetracosadiene, pentacosadiene, hexacosadiene, heptacosadiene, octacosadiene, nonacosadiene, triacontadiene, particularly preferred dienes include 1,6-heptadiene, 1,7-octadiene, 1,8-nonadiene, 1,9-decadiene, 1,10-undecadiene, 1,11-dodecadiene, 1,12-tridecadiene, 1,13-tetradecadiene, and low molecular weight polybutadienes (Mw less than 1000 g/mol). Non-limiting example cyclic dienes include cyclopentadiene, vinylnorbornene, norbornadiene, ethylidene norbornene, divinylbenzene, dicyclopentadiene or higher ring containing diolefins with or without substituents at various ring positions.

Polymerization processes of the present disclosure may be carried out in any suitable manner known in the art. Any suspension, homogeneous, bulk, solution, slurry, or gas phase polymerization process known in the art may be used. Such processes can be run in a batch, semi-batch, or continuous mode. A homogeneous polymerization process is defined to be a process where at least about 90 wt% of the product is soluble in the reaction media. A bulk process is defined to be a process where monomer concentration in all feeds to the reactor is 70 volume % or more. Alternately, no solvent or diluent is present or added in the reaction medium, (except for the small amounts used as the carrier for the catalyst system or other additives, or amounts typically found with the monomer; e.g., propane in propylene).

In another embodiment, the process is a slurry process. As used herein, the term "slurry polymerization process" means a polymerization process where a supported catalyst is used and monomers are polymerized on the supported catalyst particles. At least 95 wt% of polymer products derived from the supported catalyst are in granular form as solid particles (not dissolved in the diluent).

Suitable diluents/solvents for polymerization include non-coordinating, inert liquids. Non-limiting examples include straight and branched-chain hydrocarbons, such as isobutane, butane, pentane, isopentane, hexane, isohexane, heptane, octane, dodecane, and mixtures thereof; cyclic and alicyclic hydrocarbons, such as cyclohexane, cycloheptane, methylcyclohexane, methylcycloheptane, and mixtures thereof, such as can be found commercially (Isopar™); perhalogenated hydrocarbons, such as perfluorinated C4 to C10 alkanes, chlorobenzene, and aromatic and alkylsubstituted aromatic compounds, such as benzene, toluene, mesitylene, and xylene. Suitable solvents also include liquid olefins which may act as monomers or comonomers including, but not limited to, ethylene, propylene, 1-butene, 1-hexene, 1-pentene, 3-methyl-1-pentene, 4-methyl-1-pentene, 1-octene, 1-decene, and mixtures thereof. In a preferred embodiment, aliphatic hydrocarbon solvents are used as the solvent, such as isobutane, butane, pentane, isopentane, hexane, isohexane, heptane, octane, dodecane, or mixtures thereof; cyclic and alicyclic hydrocarbons, such as cyclohexane, cycloheptane, methylcyclohexane, methylcycloheptane, or mixtures thereof.

Preferred polymerization processes may be run at any temperature and/or pressure suitable to obtain the desired polyolefins. Typical temperatures and/or pressures include a temperature between about 0°C and about 300°C, such as between about 20°C and about 200°C, such as between about 35°C and about 150°C, such as between about 40°C and about 120°C, such as between about 45°C and about 80°C; and at a pressure between about 0.35 MPa and about 10 MPa, such as between about 0.45 MPa and about 6 MPa, or preferably between about 0.5 MPa and about 4 MPa.

Hydrogen may be added to a reactor for molecular weight control of polyolefins. In at least one embodiment, hydrogen is present in the polymerization reactor at a partial pressure of between about 0.001 and 50 psig (0.007 to 345 kPa), such as between about 0.01 and about 25 psig (0.07 to 172 kPa), such as between about 0.1 and 10 psig (0.7 to 70 kPa). In one embodiment, 600 ppm or less of hydrogen is added, or 500 ppm or less of hydrogen is added, or 400 ppm or less or 300 ppm or less. In other embodiments at least 50 ppm of hydrogen is added, or 100 ppm or more, or 150 ppm or more.

In a class of embodiments, the polymerization processes are gas phase polymerization processes. Generally, in a fluidized gas bed process used for producing polymers, a gaseous stream containing one or more monomers is continuously cycled through a fluidized bed in the presence of a catalyst under reactive conditions. The gaseous stream is withdrawn from the fluidized bed and recycled back into the reactor. Simultaneously, polymer product is withdrawn from the reactor and fresh monomer is added to replace the polymerized monomer. Typically, the gas phase reactor may operate in condensing mode where one or more of the diluents/solvents, as described above, act as an inert condensing agent (ICA) in the fluidized bed reactor for the removal of heat to increase production rates and/or modify polymer properties. *See, for example,* U.S. Patent Nos. 4,543,399; 4,588,790; 5,028,670; 5,317,036; 5,352,749; 5,405,922; 5,436,304; 5,453,471; 5,462,999; 5,616,661; and 5,668,228.

In another class of embodiments, the polymerization processes are slurry phase polymerization processes. A slurry polymerization process generally operates between 1 to about 50 atmosphere pressure range (15 psi to 735 psi, 103 kPa to 5068 kPa) or even greater and temperatures in the range of 0°C to about 120°C. In a slurry polymerization process, a suspension of solid, particulate polymer is formed in a liquid polymerization diluent medium to which monomer and comonomers, along with catalysts, are added. The suspension including a diluent is intermittently or continuously removed from the reactor where the volatile components are separated from the polymer and recycled, optionally, after a distillation, to the reactor. The liquid diluent employed in the polymerization medium is typically an alkane having from 3 to 7 carbon atoms, preferably a branched alkane. The medium employed should be liquid under the conditions of polymerization and relatively inert. When a propane medium is used, the process should be operated above the reaction diluent critical temperature and pressure. Preferably, a hexane or an isobutane medium is employed.

Chromium-containing Catalyst and Aluminum Alkyl Delivery

The polymerization reactor systems and polymerization processes discussed above may employ a delivery system or process for delivering the at least one chromium-containing catalyst and at least one aluminum alkyl being pre-contacted outside of the reactor in a slurry mixture and then being introduced into the reactor as a catalyst mixture. For example, an embodiment provides for a method of operating a polyolefin reactor, the method including feeding a slurry mixture of an activated chromium-containing catalyst in the reactor solvent such as isobutante or a white mineral oil and then pre-contacted with an aluminum alkyl to a polymerization reactor such as a gas phase reactor or slurry reactor. The catalyst mixture may be fed substantially continuously to the polymerization reactor. The delivery system may include a mixer such as a static mixer or stirred vessel that uniformly contacts the chromium-containing catalyst with the aluminum alkyl. Furthermore, each solvent or diluent, such as a higher viscosity mineral oil, may require adjustment of the contact residence time of the pre-contacting of the chromium-containing catalyst with the aluminum alkyl.

In several classes of embodiments, the pre-contacting step may occur inline just before injection into the polymerization reactor and outside of the reactor. The delivery may be accomplished via multiple methods. For example, the chromium-containing catalyst may be mixed with the aluminum alkyl (or an aluminum alkyl solution of lower concentration) in a mixing vessel with rotating mechanical agitator or an inline static mixer followed by a designated length of downstream piping to allow for contact time between the chromium-containing catalyst and aluminum alkyl. Alternatively, the pre-contacting between the chromium-containing catalyst with the aluminum alkyl may take place in a vessel in place of or in combination with piping. In any of these embodiments, the contact time between the chromium-containing catalyst with the aluminum alkyl may be controlled via adding varying amounts of diluent to the feed system which may be used to increase or decrease the contact time as desired.

Exemplary contact times of the chromium-containing catalyst with the aluminum alkyl may be in the range of 1 second to 150 minutes, 1 second to 100 minutes, 1 second to 10 minutes, 1 second to 90 seconds, 30 seconds to 30 minutes, 2 minutes to 120 minutes, 10 minutes to 30 minutes, or 18 minutes to 30 minutes.

Advantageously, embodiments disclosed herein provide for a process with the flexibility for adjusting or changing one or more of the high load melt index ($I_{21.6}$), weight average molecular weight ($M_w$), and molecular weight distribution ($M_w/M_n$) of one or more of polyolefin polymers during a polymerization reaction or adjusting the catalyst activity of the polymerization reaction when the ratio of aluminum alkyl to chromium-containing catalyst changes. The ratio may be adjusted by one or more of: increasing/decreasing contact times; increasing/decreasing the diluent concentration; and increasing/decreasing the concentration of the chromium-containing catalyst and/or the aluminum alkyl, etc.

In several classes of embodiments, the catalyst activity of the polymerization reaction is at least 1,500 g/g/hr or greater, at least 1,750 g/g/hr or greater, at least 2,000 g/g/hr or greater, at least 2,250 g/g/hr or greater, at least 2,500 g/g/hr or greater, at least 2,600 g/g/hr or greater, at least 2,750 g/g/hr or greater, at least 3,000 g/g/hr or greater, or at least 3,100 g/g/hr or greater.

Polymer Product

The present disclosure also relates to the production of polyolefin polymers produced by the chromium-containing catalysts and cocatalysts and the processes described herein. In at least one embodiment, a process includes producing ethylene homopolymers or ethylene copolymers, such as ethylene-alphaolefin (preferably C3 to C20) copolymers (such as ethylene-butene, ethylene-hexene copolymers or ethylene-octene copolymers).

In at least one embodiment, the polyolefin polymers produced herein are homopolymers of ethylene or copolymers of ethylene preferably having between about 0 and 25 mole% of one or more C3 to C20 olefin comonomer (such as between about 0.5 and 20 mole%, between about 1 and about 15 mole%, or between about 3 and about 10 mole%). Olefin comonomers may be C3 to C12 alpha-olefins, such as one or more of propylene, butene, hexene, octene, decene, dodecene, preferably propylene, butene, hexene, octene.

Polyolefin polymers produced herein may have a density in accordance with ASTM D-4703 and ASTM D-1505/ISO 1183 of from about 0.935 to about 0.960 $g/cm^3$, from about 0.940 to about 0.959 $g/cm^3$, from about 0.945 to about 0.957 $g/cm^3$, from about 0.945 to about 0.955 $g/cm^3$, or from about 0.945 to about 0.950 $g/cm^3$.

Polyolefin polymers produced herein may have a melt index (MI) or ($I_{2.16}$) as measured by ASTM D-1238-E (190°C/2.16 kg) of about 0.01 to about 300 g/10 min, about 0.1 to about 100 g/10 min, about 0.1 to about 50 g/10 min, about 0.1 g/10 min to about 5.0 g/10 min, about 0.1 g/10 min to about 3.0 g/10 min, about 0.2 g/10 min to about 2.0 g/10 min, about 0.1 g/10 min to about 1.2 g/10 min, about 0.2 g/10min to about 1.5 g/10 min, about 0.2 g/10 min to about 1.1 g/10 min, about 0.3 g/10 min to about 1.0 g/10 min, about 0.4 g/10 min to about 1.0 g/10 min, about 0.5 g/10 min to about 1.0 g/10 min, about 0.6 g/10 min to about 1.0 g/10 min, about 0.7 g/10 min to about 1.0 g/10 min, or about 0.75 g/10 min to about 0.95 g/10 min.

Polyolefin polymers produced herein may have a high load melt index (HLMI) or ($I_{21.6}$) as measured by ASTM D-1238-F (190°C/21.6 kg) of about 0.1 to about 300 g/10 min, about 0.1 to about 100 g/10 min, about 0.1 to about 50 g/10 min, about 1.0 g/10 min to about 50.0 g/10 min, about 0.1 g/10 min to about 35.0 g/10 min, about 0.1 g/10 min to about 30.0 g/10 min, about 1.0 g/10 min to about 10.0 g/10 min, about 1.0 g/10 min to about 6.0 g/10 min, about 1.0 g/10 min to about 5.0 g/10 min, about 2.0 g/10 min to about 4.0 g/10 min, about 0.4 g/10 min to about 1.0 g/10 min, about 0.5 g/10 min to about 1.0 g/10 min, about 0.6 g/10 min to about 1.0 g/10 min, about 0.7 g/10 min to about 1.0 g/10 min, or about 0.75 g/10 min to about 0.95 g/10 min.

In a class of embodiments, the one or more of polyolefin polymers have at least a first high load melt index ($I_{21.6}$) and at least a second high load melt index ($I_{21.6}$). The at least first high load melt index ($I_{21.6}$) and the at least second high load melt index ($I_{21.6}$) may be in the range of from 0.1 to 100 g/10 min or from 1 to 50 g/10 min.

Polyolefin polymers produced herein may have a weight average molecular weight ($M_w$) of from about 15,000 to about 500,000 g/mol, from about 20,000 to about 250,000 g/mol, from about 25,000 to about 200,000 g/mol, from about 150,000 to about 400,000 g/mol, from about 200,000 to about 400,000 g/mol, or from about 180,000 to about 350,000 g/mol.

In a class of embodiments, the one or more of polyolefin polymers may have at least a first weight average molecular weight ($M_w$) and at least a second weight average molecular weight ($M_w$). The at least first weight average molecular weight ($M_w$) and the at least second weight average molecular weight ($M_w$) may be in the range of from 20,000 to 400,000 g/mol or from 100,000 to 350,000 g/mol. $M_z$ average molecular weights should also be reported as an indicator of the high MW tail that is desired for ESCR.

Polyolefin polymers produced herein may have a molecular weight distribution (MWD) or ($M_w/M_n$) of from about 1 to about 60, from about 5 to about 50, from about 15 to about 40, or from about 17 to about 35. As noted above, the Mz/Mw ratio should be reported to indicate the high MW characteristics. Appearance of a shoulder is also significant.

In a class of embodiments, the one or more of polyolefin polymers may have at least a first molecular weight distribution ($M_w/M_n$) and at least a second molecular weight distribution (Mw/Mn). The at least a first molecular weight distribution ($M_w/M_n$) and at least second molecular weight distribution ($M_w/M_n$) may be in the range of from 5 to 50 or from 10 to 40.

Molecular weight distribution ("MWD") is equivalent to the expression $M_w/M_n$. The expression $M_w/M_n$ is the ratio of the weight average molecular weight ($M_w$) to the number average molecular weight ($M_n$). The weight average molecular weight is given by:

$$M_w = \frac{\sum_i n_i M_i^2}{\sum_i n_i M_i} \quad ;$$

the number average molecular weight is given by:

$$M_n = \frac{\sum_i n_i M_i}{\sum_i n_i} \quad ;$$

the z-average molecular weight is given by:

$$M_z = \frac{\sum_i n_i M_i^{\,3}}{\sum_i n_i M_i^{\,2}} \quad ;$$

where $n_i$ in the foregoing equations is the number fraction of molecules of molecular weight $M_i$. Mw, Mn and Mw/Mn are determined by using a High Temperature Gel Permeation Chromatography (Polymer Laboratories), equipped with a differential refractive index detector (DRI). Three Polymer Laboratories PLgel 10μm Mixed-B columns are used. The nominal flow rate is 1.0 mL/min and the nominal injection volume is 300 μL. The various transfer lines, columns, and differential refractometer (the DRI detector) are contained in an oven maintained at 160°C. Solvent for the experiment is prepared by dissolving 6 grams of butylated hydroxytoluene as an antioxidant in 4 liters of Aldrich reagent grade 1, 2, 4 trichlorobenzene (TCB). The TCB mixture is then filtered through a 0.1 μm Teflon filter. The TCB is then degassed with an online degasser before entering the GPC instrument. Polymer solutions are prepared by placing dry polymer in glass vials, adding the desired amount of TCB, then heating the mixture at 160°C with continuous shaking for about 2 hours. All quantities are measured gravimetrically. The injection concentration is from 0.5 to 2.0 mg/ml, with lower concentrations being used for higher molecular weight samples. Prior to running each sample, the DRI detector is purged. Flow rate in the apparatus is then increased to 1.0 ml/minute, and the DRI is allowed to stabilize for 8 hours before injecting the first sample. The molecular weight is determined by combining universal calibration relationship with the column calibration which is performed with a series of monodispersed polystyrene (PS) standards. The MW is calculated at each elution volume with following equation:

$$\log M_X = \frac{\log(K_X / K_{PS})}{a_X + 1} + \frac{a_{PS} + 1}{a_X + 1}\log M_{PS},$$

where the variables with subscript "X" stand for the test sample while those with subscript "PS" stand for PS. In this method, $a_{PS}$ = 0.67 and $K_{PS}$ = 0.000175 while $a_X$ and $K_X$ are obtained from published literature. Specifically, $a/K$ = 0.695/0.000579 for PE and 0.705/0.0002288 for PP.

The concentration, c, at each point in the chromatogram is calculated from the baseline-subtracted DRI signal, $I_{DRI}$, using the following equation:

$$c = K_{DRI}I_{DRI}/(dn/dc),$$

where $K_{DRI}$ is a constant determined by calibrating the DRI, and (dn/dc) is the refractive index increment for the system. Specifically, dn/dc = 0.109 for both PE and PP. The mass recovery is calculated from the ratio of the integrated area of the concentration chromatography over elution volume and the injection mass which is equal to the predetermined concentration multiplied by injection loop volume. All molecular weights are reported in g/mol unless otherwise noted.

End Use Applications

The polyolefin polymers produced by the chromium-containing catalysts and cocatalysts and the processes described herein may be made into films, molded articles, sheets, pipes, drums, Intermediate Bulk Containers (IBC's), wire and cable coating and the like. The films may be formed by any of the conventional technique known in the art including extrusion, co-extrusion, lamination, blowing and casting.

Processing methods of polyolefin polymers for making molded articles are discussed in, for example, Carraher, Jr., Charles E. (1996): POLYMER CHEMISTRY: AN INTRODUCTION, Marcel Dekker Inc., New York, 512-516. Examples of extruded articles include tubing, medical tubing, wire and cable coatings, pipe, geomembranes, and pond liners. Examples of molded articles include single and multi-layered constructions in the form of bottles, drums, IBC's, tanks, large hollow articles, rigid food containers and toys, etc.

Desirable articles include automotive components, sporting equipment, outdoor furniture (e.g., garden furniture) and playground equipment, boat and water craft components, and other such articles. More particularly, automotive components include such as bumpers, grills, trim parts, dashboards and instrument panels, exterior door and hood components, spoiler, wind screen, hub caps, mirror housing, body panel, protective side molding, and other interior and external components associated with automobiles, trucks, boats, and other vehicles.

Other articles also include crates, containers, packaging material, labware, office floor mats, instrumentation sample holders and sample windows; liquid storage containers for medical uses such as bags, pouches, and bottles for storage and IV infusion of blood or solutions; wrapping or containing food preserved by irradiation, other medical devices including infusion kits, catheters, and respiratory therapy, as well as packaging materials for medical devices and food which may be irradiated by gamma or ultraviolet radiation including trays, as well as stored liquid, particularly water, milk, or juice, containers including unit servings and bulk and industrial storage containers.

## EXAMPLES

It is to be understood that while the invention has been described in conjunction with the specific embodiments thereof, the foregoing description is intended to illustrate and not limit the scope of the invention. Other aspects, advantages and modifications will be apparent to those skilled in the art to which the invention pertains.

Therefore, the following examples are put forth so as to provide those skilled in the art with a complete disclosure and description and are not intended to limit the scope of that which the inventors regard as their invention.

## Catalyst Preparation

## Catalyst A

In a nitrogen purged drybox, a glass vial was charged with 0.1 g of PD-11050 chromium catalyst (1 wt% Cr; 880 $m^2$/g surface area; and 1.87 mL/g pore volume) (available from PQ Corporation) activated at 677°C in dry air and 2 mL of dry hexane. 0.5-1.5 mL of 0.04 M DEALE solution in hexane was added dropwise to a vortexing vial containing the activated PD-11050 catalyst so the catalyst and DEALE solution were mixed. The catalyst and DEALE were pre-contacted for 10-30 min before they were charged into the reactor for ethylene polymerization.

## Catalyst B

PQ PD-11050 chromium catalyst was activated at 677°C in dry air using the same method of Catalyst A but without the DEALE pre-contact procedure to produce Catalyst B.

## Catalyst C

PQ PD-13070 chromium catalyst (1 wt% Cr and 0.6 wt% Al; 872 $m^2$/g surface area; and 2.03 mL/g pore volume) (available from PQ Corporation) was activated at 677°C in dry air using the same method of Catalyst A but without the DEALE pre-contact procedure to produce Catalyst C.

## Ethylene Polymerization

Ethylene polymerization was carried out in a 2 L Zipper-clave reactor. The reactor was first purged under a nitrogen flow for 2 hrs at 120-140°C. Then, 1-hexene and 750 mL of isobutane were added to the reactor. The reactor was heated to 99-105°C and pressurized with ethylene to a total pressure of 410-450 psig (2.83-3.10 MPa). Catalyst A, B or C and 0.1 g of scavenger containing 0.05 mmol of TEAL supported on dehydrated silica were finally charged to the reactor by addition of 250 mL of isobutane through the catalyst charge tube. During polymerization, the reactor temperature was controlled via thermocouples in the reactor and the external jacket. Ethylene was fed on demand to maintain the desired total pressure. The polymerization was terminated by stopping the heat and venting off the volatiles after approximate 2500 g PE/g catalyst productivity was obtained.

## Examples 1-7

Ethylene copolymerizations were conducted with Catalyst A. The polymerization and testing results are summarized in Table 1.

## Comparative Examples 1-6

Ethylene copolymerizations were conducted with Catalyst B and Catalyst C. The polymerization and testing results are summarized in Table 2.

As the data show, increasing Al/Cr molar ratio resulted in a higher polyethylene High Load Melt Index ($I_{21.6}$) and density. Molecular weight distributions (Mw/Mn) from the inventive examples were broader, which should improve blow molding product properties, for example, Environmental Strain Crack Resistance. Examples 1-2 and 4-5 with 1-2 DEALE/Cr molar ratios also had higher catalyst activities than Comparative Example 2 with same polymerization conditions.

The FIG. shows the High Load Melt Index ($I_{21.6}$) of polyethylene prepared from PD-11050 activated Cr catalyst pre-contacted with DEALE (Examples 1-6) was higher than that from PD-11050 activated Cr catalyst without DEALE pre-contact procedure (Comparative Example 2). Thus, the data and Figure show that a wide variety of polymers may be polymerized having different polymer properties, for example, Melt Index, High Load Melt Index, and/or molecular weight distributions, by adjusting the Al/Cr ratio while also maintaining good catalyst activities. This solution provides a simple approach to producing multiple grades of polymers without the constant need to switch-out the catalyst.

Table 1. Polymerization and Testing Data with Catalyst A

| Example | DEALE/Cr mol/mol | Precontact Time min | 1-Hexene mL | Activity g/g/hr | $I_{2.16}$ g/10 min | $I_{21.6}$ g/10 min | Density g/cm$^3$ | Mw kg/mole | Mw/Mn | Mz/Mw |
|---|---|---|---|---|---|---|---|---|---|---|
| 1 | 1 | 12 | 2 | 2952 | 0.06 | 11.94 | 0.9548 | 219.8 | 18.46 | 6.92 |
| 2 | 2 | 10 | 2 | 3047 | 0.20 | 23.51 | 0.9572 | 199.6 | 33.95 | 8.18 |
| 3 | 3 | 13 | 2 | 2675 | 0.27 | 29.27 | 0.9575 | 196.1 | 18.92 | 8.59 |
| 4 | 1 | 30 | 2 | 3280 | 0.11 | 16.63 | 0.9546 | 216.5 | 24.17 | 7.65 |
| 5 | 2 | 30 | 2 | 3331 | 0.20 | 21.61 | 0.9559 | 194.4 | 21.75 | 8.13 |
| 6 | 3 | 30 | 2 | 2638 | 0.18 | 24.77 | 0.9567 | 212.8 | 19.67 | 8.11 |
| 7 | 2 | 10 | 6 | 2230 | 0.40 | 32.80 | 0.9537 | 181.2 | 17.62 | 8.73 |

102°C polymerization T and 430 psig total pressure were used for Examples 1-7.

Table 2. Polymerization and Testing Data with Catalyst B and Catalyst C

| Comparative Example | Catalyst | Polymerization T °C | Total Press. psig | Activity g/g/hr | $I_{2.16}$ g/10 min | $I_{21.6}$ g/10 min | Density g/cm³ | Mw kg/ mole | Mw/Mn | Mz/Mw |
|---|---|---|---|---|---|---|---|---|---|---|
| 1 | B | 99 | 410 | 2427 | 0 | 4.22 | 0.9505 | -- | -- | -- |
| 2 | B | 102 | 430 | 2718 | 0 | 6.56 | 0.9504 | 241.3 | 14.37 | 6.25 |
| 3 | B | 105 | 450 | 2694 | 0.2 | 13.94 | 0.9498 | -- | -- | -- |
| 4 | C | 99 | 410 | 2716 | 0.04 | 5.36 | 0.9499 | -- | -- | -- |
| 5 | C | 102 | 430 | 2315 | 0.06 | 6.71 | 0.9508 | 246.5 | 12.99 | 6.01 |
| 6 | C | 105 | 450 | 2520 | 0.27 | 17.26 | 0.9498 | -- | -- | -- |
| 2 mL of 1-hexene was used for Comparative Examples 1-6. | | | | | | | | | | |

The phrases, unless otherwise specified, "consists essentially of" and "consisting essentially of" do not exclude the presence of other steps, elements, or materials, whether or not, specifically mentioned in this specification, so long as such steps, elements, or materials, do not affect the basic and novel characteristics of the invention, additionally, they do not exclude impurities and variances normally associated with the elements and materials used.

For the sake of brevity, only certain ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited. Additionally, within a range includes every point or individual value between its end points even though not explicitly recited. Thus, every point or individual value may serve as its own lower or upper limit combined with any other point or individual value or any other lower or upper limit, to recite a range not explicitly recited.

[Deleted]

[Deleted]

## Claims

1. A process for adjusting one or more of the high load melt index ($I_{21.6}$), weight average molecular weight ($M_w$), and molecular weight distribution ($M_W/M_n$) of one or more of polyolefin polymers during a polymerization reaction or adjusting the catalyst activity of the polymerization reaction, the process comprising:

   a) pre-contacting at least one activated chromium-containing catalyst with at least one aluminum alkyl to form a catalyst slurry mixture outside of a polymerization reactor;
   b) passing the catalyst slurry mixture to the polymerization reactor;
   c) contacting the catalyst mixture with one or more monomers under polymerizable conditions to form the one or more of polyolefin polymers; and
   d) recovering the one or more of polyolefin polymers

   wherein one or more of the high load melt index ($I_{21.6}$), the weight average molecular weight ($M_w$), and the molecular weight distribution ($M_W/M_n$) of the one or more of polyolefin polymers or the catalyst activity of the polymerization reaction changes when the ratio of aluminum alkyl to chromium-containing catalyst changes.

2. The process of claim 1, wherein the aluminum alkyl is pre-contacted with the at least one chromium-containing catalyst at an Al/Cr molar ratio of 0.01 to 10.00, preferably 0.05 to 8.00, more preferably 0.10 to 5.00, even more preferably 1.00 to 3.00.

3. The process of claims 1 or 2, wherein the one or more of polyolefin polymers have at least a first high load melt index ($I_{21.6}$) and at least a second high load melt index ($I_{21.6}$).

4. The process of claim 3, wherein the at least first high load melt index ($I_{21.6}$) and the at least second high load melt index ($I_{21.6}$) are in the range of from 0.1 to 100 g/10 min, preferably from 1 to 50g/10 min.

5. The process of any one of the preceding claims, wherein the one or more of polyolefin polymers have at least a first weight average molecular weight ($M_w$) and at least a second weight average molecular weight ($M_W$).

6. The process of claim 5, wherein the at least first weight average molecular weight ($M_w$) and the at least second weight average molecular weight ($M_w$) are in the range of from 20,000 to 400,000 g/mol, preferably from 100,000 to 350,000 g/mol.

7. The process of any one of the preceding claims, wherein the one or more of polyolefin polymers have at least a first molecular weight distribution ($M_W/M_n$) and at least a second molecular weight distribution ($M_W/M_n$).

8. The process of claim 7, wherein the at least first molecular weight distribution ($M_W/M_n$) and the at least second molecular weight distribution ($M_W/M_n$) are in the range of from 5 to 50, preferably from 10 to 40.

9. The process of any one of the preceding claims, wherein the pre-contacting occurs at time period of from 1 second to 100 minutes, preferably from 30 seconds to 30 minutes.

10. The process of any one of the preceding claims, wherein the at least one chromium-containing catalyst comprises chromium oxide ($CrO_3$) and/or silylchromate catalysts, optionally, with a support.

11. The process of claim 10, wherein the support comprises silicon oxide, aluminum oxide, zirconium oxide, thorium oxide, or mixtures thereof.

12. The process of any one of the preceding claims, wherein the at least one aluminum alkyl is an alkyl aluminum alkoxide compound, preferably diethyl aluminum ethoxide.

13. The process of any one of claims 1-11, wherein the at least one aluminum alkyl is selected from the group consisting of triethyl aluminum, tri-isobutyl aluminum, tri-n-hexyl aluminum, tri-n-octylaluminum, and mixtures thereof.

14. The process of any one of the preceding claims, wherein the catalyst activity is at least 2,000 g/g/hr or greater, preferably 2,250 g/g/hr or greater, more preferably at least 2,500 g/g/hr or greater.

**Patentansprüche**

1. Verfahren zum Einstellen eines oder mehrerer der folgenden Parameter: Hochlast-Schmelzindex ($I_{21.6}$), gewichtsmittleres Molekulargewicht ($M_W$); und Molekulargewichtsverteilung ($M_W/M_n$) von einem oder mehreren Polyolefinpolymeren während einer Polymerisationsreaktion oder Einstellen der Katalysatoraktivität der Polymerisationsreaktion, wobei das Verfahren umfasst:

a) Vorkontaktierung mindestens eines aktivierten chromhaltigen Katalysators mit mindestens einem Aluminiumalkyl zur Bildung einer Katalysatoraufschlämmung außerhalb eines Polymerisationsreaktors;
b) Einleiten der Katalysatoraufschlämmungsmischung in den Polymerisationsreaktor;
c) Inkontaktbringen der Katalysatormischung mit einem oder mehreren Monomeren unter polymerisierbaren Bedingungen, um das eine oder mehrere Polyolefinpolymere zu bilden; und
d) Gewinnung eines oder mehrerer der Polyolefinpolymere

wobei sich der Hochlast-Schmelzindex ($I_{21.6}$), das gewichtsmittlere Molekulargewicht (Mw) und/oder die Moleku-largewichtsverteilung ($M_W/M_n$) des einen oder mehrerer Polyolefinpolymere oder die Katalysatoraktivität der Polymerisationsreaktion ändert, wenn sich das Verhältnis von Aluminiumalkyl zu chromhaltigem Katalysator ändert.

2. Verfahren nach Anspruch 1, wobei das Aluminiumalkyl mit dem mindestens einen chromhaltigen Katalysator bei einem Al/Cr-Molverhältnis von 0,01 bis 10,00, vorzugsweise 0,05 bis 8,00, bevorzugter 0,10 bis 5,00, noch bevorzugter 1,00 bis 3,00 vorkontaktiert wird.

3. Verfahren nach Anspruch 1 oder 2, wobei das eine oder die mehreren Polyolefinpolymere mindestens einen ersten Hochlast-Schmelzindex ($I_{21.6}$) und mindestens einen zweiten Hochlast-Schmelzindex ($I_{21.6}$) aufweisen.

4. Verfahren nach Anspruch 3, wobei der mindestens erste Hochlast-Schmelzindex ($I_{21.6}$) und der mindestens zweite Hochlast-Schmelzindex ($I_{21.6}$) im Bereich von 0,1 bis 100 g/10 min, vorzugsweise von 1 bis 50 g/10 min liegen.

5. Verfahren nach einem der vorhergehenden Ansprüche, wobei das eine oder die mehreren Polyolefinpolymere mindestens ein erstes gewichtsmittleres Molekulargewicht (Mw) und mindestens ein zweites gewichtsmittleres Molekulargewicht (Mw) aufweisen.

6. Verfahren nach Anspruch 5, wobei das mindestens erste gewichtsmittlere Molekulargewicht (Mw) und das mindestens zweite gewichtsmittlere Molekulargewicht ($M_w$) im Bereich von 20.000 bis 400.000 g/mol, vorzugsweise von 100.000 bis 350.000 g/mol liegen.

7. Verfahren nach einem der vorhergehenden Ansprüche, wobei das eine oder mehrere der Polyolefinpolymere mindestens eine erste Molekulargewichtsverteilung ($M_W/M_n$) und mindestens eine zweite Molekulargewichtsverteilung ($M_W/M_n$) aufweisen.

8. Verfahren nach Anspruch 7, wobei die mindestens erste Molekulargewichtsverteilung ($M_W/M_n$) und die mindestens zweite Molekulargewichtsverteilung ($M_W/M_n$) im Bereich von 5 bis 50, vorzugsweise von 10 bis 40, liegen.

**9.** Verfahren nach einem der vorhergehenden Ansprüche, wobei die Vorkontaktierung in einem Zeitraum von 1 Sekunde bis 100 Minuten, vorzugsweise von 30 Sekunden bis 30 Minuten, erfolgt.

**10.** Verfahren nach einem der vorhergehenden Ansprüche, wobei der mindestens eine chromhaltige Katalysator Chromoxid ($CrO_3$) und/oder Silylchromatkatalysatoren, gegebenenfalls mit einem Träger, umfasst.

**11.** Verfahren nach Anspruch 10, wobei der Träger Siliziumoxid, Aluminiumoxid, Zirkoniumoxid, Thoriumoxid oder Mischungen davon umfasst.

**12.** Verfahren nach einem der vorhergehenden Ansprüche, wobei das mindestens eine Aluminiumalkyl eine Alkylaluminiumalkoxidverbindung, vorzugsweise Diethylaluminiumethoxid, ist.

**13.** Verfahren nach einem der Ansprüche 1 bis 11, wobei das mindestens eine Aluminiumalkyl ausgewählt ist aus der Gruppe bestehend aus Triethylaluminium, Tri-Isobutylaluminium, Tri-n-Hexylaluminium, Tri-n-Octylaluminium und Mischungen davon.

**14.** Verfahren nach einem der vorhergehenden Ansprüche, wobei die Katalysatoraktivität mindestens 2.000 g/g/h oder größer, vorzugsweise 2.250 g/g/h oder größer, noch bevorzugter mindestens 2.500 g/g/h oder größer ist.

**Revendications**

**1.** Procédé pour l'ajustement d'un ou plusieurs parmi l'indice de fluidité à chaud sous charge élevée ($I_{21,6}$), le poids moléculaire moyen en poids (Mw) et la distribution de poids moléculaire ($M_W/M_n$) d'un ou plusieurs polymères de type polyoléfine pendant une réaction de polymérisation ou l'ajustement de l'activité de catalyseur de la réaction de polymérisation, le procédé comprenant :

a) la pré-mise en contact d'au moins un catalyseur contenant du chrome activé avec au moins un alkylaluminium pour former un mélange en suspension de catalyseur à l'extérieur d'un réacteur de polymérisation ;
b) le passage du mélange en suspension de catalyseur vers le réacteur de polymérisation ;
c) la mise en contact du mélange de catalyseur avec un ou plusieurs monomères dans des conditions polymérisables pour former le ou les polymères de type polyoléfine ; et
d) la récupération du ou des polymères de type polyoléfine ,

l'un ou plusieurs parmi l'indice de fluidité à chaud sous charge élevée ($I_{21,6}$), le poids moléculaire moyen en poids (Mw) et la distribution de poids moléculaire ($M_W/M_n$) du ou des polymères de type polyoléfine ou l'activité de catalyseur de la réaction de polymérisation changeant lorsque le rapport d'alkylaluminium sur catalyseur contenant du chrome change.

**2.** Procédé selon la revendication 1, l'alkylaluminium étant pré-mis en contact avec l'au moins un catalyseur contenant du chrome à raison d'un rapport molaire Al/Cr de 0,01 à 10,00, préférablement de 0,05 à 8,00, plus préférablement de 0,10 à 5,00, encore plus préférablement de 1,00 à 3,00.

**3.** Procédé selon la revendication 1 ou 2, le ou les polymères de type polyoléfine possédant au moins un premier indice de fluidité à chaud sous charge élevée ($I_{21,6}$) et au moins un deuxième indice de fluidité à chaud sous charge élevée ($I_{21,6}$).

**4.** Procédé selon la revendication 3, l'au moins premier indice de fluidité à chaud sous charge élevée ($I_{21,6}$) et l'au moins deuxième indice de fluidité à chaud sous charge élevée ($I_{21,6}$) étant dans la plage allant de 0,1 à 100 g/10 min, préférablement de 1 à 50 g/10 min.

**5.** Procédé selon l'une quelconque des revendications précédentes, le ou les polymères de type polyoléfine possédant au moins un premier poids moléculaire moyen en poids ($M_w$) et au moins un deuxième poids moléculaire moyen en poids (Mw) .

**6.** Procédé selon la revendication 5, l'au moins premier poids moléculaire moyen en poids (Mw) et l'au moins deuxième poids moléculaire moyen en poids (Mw) étant dans la plage allant de 20 000 à 400 000 g/mole, préférablement de 100 000 à 350 000 g/mole.

**7.** Procédé selon l'une quelconque des revendications précédentes, le ou les polymères de type polyoléfine possédant au moins une première distribution de poids moléculaire ($M_W/M_n$) et au moins une deuxième distribution de poids moléculaire ($M_W/M_n$).

**8.** Procédé selon la revendication 7, l'au moins première distribution de poids moléculaire ($M_W/M_n$) et l'au moins deuxième distribution de poids moléculaire ($M_W/M_n$) étant dans la plage allant de 5 à 50, préférablement de 10 à 40.

**9.** Procédé selon l'une quelconque des revendications précédentes, la pré-mise en contact ayant lieu à une période de temps allant de 1 seconde à 100 minutes, préférablement de 30 secondes à 30 minutes.

**10.** Procédé selon l'une quelconque des revendications précédentes, l'au moins un catalyseur contenant du chrome comprenant de l'oxyde de chrome ($CrO_3$) et/ou des catalyseurs de type silylchromate, éventuellement, avec un support.

**11.** Procédé selon la revendication 10, le support comprenant de l'oxyde de silicium, de l'oxyde d'aluminium, de l'oxyde de zirconium, de l'oxyde de thorium ou des mélanges correspondants.

**12.** Procédé selon l'une quelconque des revendications précédentes, l'au moins un alkylaluminium étant un composé de type alcoxyde d'alkylaluminium, préférablement l'éthoxyde de diéthylaluminium.

**13.** Procédé selon l'une quelconque des revendications 1 à 11, l'au moins un alkylaluminium étant choisi dans le groupe constitué par le triéthylaluminium, le tri-isobutylaluminium, le tri-n-hexylaluminium, le tri-n-octylaluminium et des mélanges correspondants.

**14.** Procédé selon l'une quelconque des revendications précédentes, l'activité de catalyseur étant d'au moins 2 000 g/g/h ou plus, préférablement de 2 250 g/g/h ou plus, plus préférablement d'au moins 2 500 g/g/h ou plus.

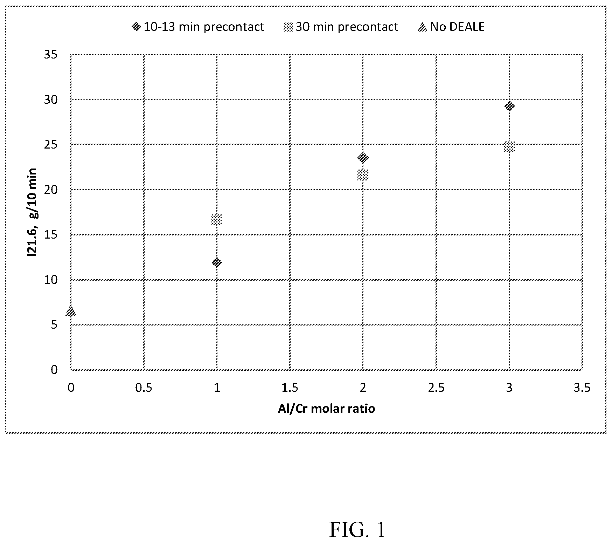

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6989344 B
- US 20030232935
- WO 2011161412 A
- WO 2016036745 A
- US 20110010938
- US 2825721 A
- US 7915357 B
- US 8129484 B
- US 7202313 B
- US 6833417 B
- US 6841630 B
- US 7504463 B
- US 7563851 B
- US 8420754 B
- US 8101691 B

- US 3887494 A
- US 5096868 A
- US 6174981 B
- US 4543399 A
- US 4588790 A
- US 5028670 A
- US 5317036 A
- US 5352749 A
- US 5405922 A
- US 5436304 A
- US 5453471 A
- US 5462999 A
- US 5616661 A
- US 5668228 A

**Non-patent literature cited in the description**

- **CARRAHER, JR. ; CHARLES E.** POLYMER CHEMISTRY: AN INTRODUCTION. Marcel Dekker Inc, 1996, 512-516